# EUROPEAN PATENT APPLICATION

(11) **EP 4 640 791 A1**
(43) Date of publication of application: **29.10.2025**
(21) Application number: 23906853.9
(22) Date of filing: 13.12.2023
(51) Int. Cl.: C09K 11/67, C01B 17/45, C01B 19/00, C09K 11/08, C09K 11/88

(54) **COLOR CONVERSION PARTICLES**

(30) Priority: 20.12.2022 JP 2022203590
(71) Applicant: Idemitsu Kosan Co.,Ltd., Tokyo 100-8321 (JP)
(72) Inventor: INATOME, Toru, Tokyo 100-8321 (JP); KIMOTO, Yoshinori, Tokyo 100-8321 (JP); KATO, Takuya, Tokyo 100-8321 (JP)
(74) Representative: Hoffmann Eitle
(86) International application number: PCT/JP2023/044587
(87) International publication number: WO 2024/135488

(57) **Abstract**

A color conversion particle includes: a particle body that contains a chalcogenide perovskite and emits light in response to excitation light received; and a shell that is formed of a semiconductor material for transmitting the excitation light and covers the particle body to inactivate defects on the surface of the particle body. The shell has a band gap more than 2.7 eV.

## Description

### Technical Field

The present invention relates to a color conversion particle.

### Background Art

Typically, in lighting, display devices, solar cells, and the like, color conversion using wavelength conversion (downconversion) of converting excitation light incident on an object from the outside into light having a longer wavelength and emitting the light has been widely utilized. In recent years, a chalcogenide perovskite, which has excellent durability and a high light absorption coefficient as compared with other materials, has attracted attention as a material for nanoparticles applied in this type of color conversion.

### Citation List

### Patent Literature

Patent Literature 1: US 2019/0225883 A
Patent Literature 2: WO 2022/113967 A
Patent Literature 3: WO 2022/113984 A

### Summary of Invention

### Technical Problem

However, in known chalcogenide perovskite nanoparticles, carriers generated by the nanoparticles absorbing excitation light may be deactivated on the particle surface by non-radiative recombination. Accordingly, the emission intensity of the known chalcogenide perovskite nanoparticles is not necessarily sufficient, and further improvement of the emission intensity is desired.

The present invention has been made in view of the above circumstances, and provides a color conversion particle that suppresses non-radiative recombination of carriers on the particle surface and has higher emission intensity than the known emission intensity.

### Solution to Problem

A color conversion particle according to an aspect of the present invention includes: a particle body that contains a chalcogenide perovskite and emits light in response to excitation light received; and a shell that is formed of a semiconductor material for transmitting the excitation light and covers the particle body to inactivate defects on the surface of the particle body. The shell has a band gap more than 2.7 eV.

### Advantageous Effects of Invention

According to an aspect of the present invention, it is possible to provide a color conversion particle that suppresses non-radiative recombination of carriers on the particle surface and has higher emission intensity than the known emission intensity.

### Brief Description of Drawings

Fig. 1 illustrates schematic diagrams showing a configuration example of a color conversion particle of the present embodiment.
Fig. 2 is a diagram showing a procedure for producing color conversion particles in Examples.
Fig. 3 is a graph showing analysis results by an X-ray diffractometer in Examples.
Fig. 4 is a graph showing emission spectra of color conversion particles in Examples.

### Description of Embodiments

Hereinafter, embodiments will be described with reference to the drawings.

In the embodiments, in order to facilitate understanding, structures or elements other than the main parts of the present invention will be described in a simplified or omitted manner. In the drawings, the same elements are denoted by the same reference numerals. In the drawings, the shapes, dimensions, and the like of the respective elements are schematically illustrated, and do not indicate actual shapes, dimensions, and the like.

### <Structure of Color Conversion Particle>

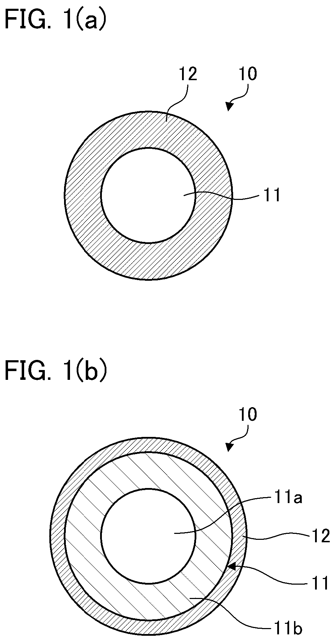

Figs. 1(a) and 1(b) are schematic diagrams showing a configuration example of a color conversion particle of the present embodiment.

A color conversion particle 10 of the present embodiment has a particle shape with a nanometer scale as a whole. The color conversion particle 10 absorbs incident excitation light and re-emits (emits) light with different energy (wavelength) to perform color conversion.

The color conversion particle 10 of the present embodiment includes a particle body 11 that generates fluorescence of a target emission wavelength in response to excitation light received, and a shell 12 that covers the particle body 11.

### (Particle Body 11)

The particle body 11 absorbs excitation light and causes optical transition between electron levels with energy corresponding to a target emission wavelength. As an example, as shown in Fig. 1(a), the particle body 11 is a light emitting particle formed of chalcogenide perovskite as a whole. The particle body 11 shown in Fig. 1(a) may contain a foreign substance that does not absorb and emit light, such as an insulator or other composition. The foreign substance is included in the particle body 11, as a result of which, for example, the light emission efficiency of the particle body 11 can be improved by scattering light, and the shape of the particle body 11 can be adjusted.

The chalcogenide perovskite: a material of the particle body 11 shown in Fig. 1(a) is a semiconductor formed of a perovskite crystal structure group containing chalcogen elements (S, Se, and Te) at an X site, and includes a semiconductor in which a part of the X site is substituted with oxygen (O).

The perovskite described above represents a substance group having a cubic crystal structure having a BX₆ octahedron as a skeleton, which is represented by a chemical formula of ABX₃, and can take a tetragonal or orthorhombic crystal structure due to lattice distortion. In addition, a plurality of stable crystal structures is shown computationally in a similar ABX₃ composition. These crystal structures include structures close to perovskites as well as significantly different structures. Further, as the derivative structure, there are a Ruddlesden-Popper type or Dion-Jacobson type layered perovskite based on a perovskite structure, a double perovskite crystal structure in which different elements are alternately arranged at the B site, and the like.

In the present specification, the above-described crystal structures are collectively referred to as "perovskite crystal structure group".

The perovskite crystal structure group specifically includes substances having the following crystal structures:
cubic perovskite; tetragonal perovskite; GdFeO₃ type orthorhombic perovskite; YScS₃ type orthorhombic perovskite; NH₄CdCl₃ type orthorhombic perovskite; BaNiO₃ type hexagonal perovskite; FePS₃ type monoclinic perovskite; PbPS₃ type monoclinic perovskite; CeTmS₃ type monoclinic perovskite; Ruddlesden-Popper type layered perovskite; Dion-Jacobson type layered perovskite; and double perovskite.

In the perovskite crystal structure group, the crystal structure and the electronic structure change depending on the composition and synthesis conditions, and the photoelectronic properties and the chemical characteristics change. Accordingly, the composition and conditions are selected to obtain a crystal structure suitable for the purpose.

For example, a substance having a cubic perovskite, tetragonal perovskite, GdFeO₃ type orthorhombic perovskite, Ruddlesden-Popper type layered perovskite, or double perovskite structure has excellent photoelectronic properties and excellent chemical characteristics. In addition, the Dion-Jacobson type layered perovskite structure can further improve chemical stability.

In particular, a substance having a crystal structure of a GdFeO₃ type orthorhombic perovskite represented by ABX₃ (A = Group 2, B = Group 4) is known to have excellent photoelectronic properties including a high light absorption coefficient.

The chemical formula of the chalcogenide perovskite can be represented by ABX₃, A'₂ₙ₋₁BₙX₃ₙ₊₁, A"A‴B"₂X₇, A"A₂B"₃X₁₀, or A₂BB'X₆.

In the above chemical formulae, X represents a chalcogen element (S, Se, or Te). A and A' represent Group 2 elements (Ca, Sr, and Ba), A" represents Group 1 elements (Li, Na, K, Rb, and Cs), and A‴ represents Group 3 elements (rare earth elements) and Bi. B and B' represent Group 4 elements (Ti, Zr, and Hf), and B" represents Group 5 elements (V, Nb, and Ta). In addition, n is a positive integer. A and A' may be the same element, and B and B' may be the same element. In addition, A, A', A", A‴, B, B', B", and X include those obtained by mixing elements of the respective groups at any ratio.

As an example, the chalcogenide perovskite represented by the chemical formula of ABX₃ includes substances described below. In the following example, X is selected from (S, Se) which are superior materials among chalcogen elements, A is selected from (Sr, Ba) which are superior materials among Group 2 elements, and B is selected from (Zr, Hf) which are superior materials among Group 4 elements.

SrZrS₃, SrZrSe₃, SrHfS₃, SrHfSe₃, BaZrS₃, BaZrSe₃, BaHfS₃, and BaHfSe₃

As an example, the chalcogenide perovskite represented by the chemical formula of A'₂Aₙ₋₁BₙX₃ₙ₊₁ includes substances described below. X is selected from (S, Se) which are superior materials among chalcogen elements, A and A' are selected from (Sr, Ba) which are superior materials among Group 2 elements, and B is selected from (Zr, Hf) which are superior materials among Group 4 elements.

Sr₂Baₙ₋₁ZrₙS₃ₙ₊₁, Sr₂Baₙ₋₁ZrₙSe₃ₙ₊₁, Srₙ₊₁ZrₙS₃ₙ₊₁, Srₙ₊₁ZrₙSe₃ₙ₊₁, Ba₂Srₙ₋₁ZrₙS₃ₙ₊₁, Ba₂Srₙ₋₁ZrₙSe₃ₙ₊₁, Baₙ₊₁ZrₙS₃ₙ₊₁, Baₙ₊₁ZrₙSe₃ₙ₊₁, Sr₂Baₙ₋₁HfₙS₃ₙ₊₁, Sr₂Baₙ₋₁HfₙSe₃ₙ₊₁, Srₙ₊₁HfₙS₃ₙ₊₁, Srₙ₊₁HfₙSe₃ₙ₊₁, Ba₂Srₙ₋₁HfₙS₃ₙ₊₁, Ba₂Srₙ₋₁HfₙSe₃ₙ₊₁, Baₙ₊₁HfₙS₃ₙ₊₁, and Baₙ₊₁HfₙSe₃ₙ₊₁.

These chalcogenide perovskites can also be expressed as (SrₓBa₁₋ₓ)(Zr_{y}Hf_{1-y})(S_{z}Se_{1-z})₃ or (Sr_{x'}Ba_{1-x'})₂(SrₓBa₁₋ₓ)ₙ₋₁(Zr_{y}Hf_{1-y})ₙ(S_{z}Se_{1-z})₃ₙ₊₁ (where each of x, x', y, and z is a value of 0 or more and 1 or less).

In the chalcogenide perovskite, a carrier concentration or a crystal structure can be controlled or other physical and chemical properties can be adjusted by partial substitution of a constituent element with an element of the same or a different group. For example, the Group 1 elements can be substituted with elements of Groups 1 and 2, the Group 2 elements can be substituted with elements of Groups 1, 2, and 3, the Group 3 elements can be substituted with elements of Groups 2, 3, and 4, the Group 4 elements can be substituted with elements of Groups 3, 4, and 5, and the Group 16 elements can be substituted with elements of Groups 15, 16, and 17.

The chalcogenide perovskite has features described below.

The chalcogenide perovskite has a large light absorption coefficient and excellent light emission performance (light emission efficiency and half-value width). In addition, the profile of the light absorption coefficient of the chalcogenide perovskite steeply rises at the band end. Accordingly, the chalcogenide perovskite has a characteristic that the absorbance in the vicinity of the band gap end is high. Therefore, the particle body 11 of the chalcogenide perovskite has high absorbance and can efficiently absorb the excitation light.

In addition, the chalcogenide perovskite has high chemical stability, and is excellent in durability against external environments and stimuli such as the atmosphere, moisture, heat, and light. Furthermore, the chalcogenide perovskite has high safety because toxic elements are not contained, and is also advantageous in that raw material cost is low because rare metals are not contained.

Here, the particle body 11 may be a light emitting particle partially containing a chalcogenide perovskite. For example, as shown in Fig. 1(b), the particle body 11 may be a light emitting particle having an inner layer 11a and an outer layer 11b, the layers being formed of different semiconductor materials, and at least one of the inner layer 11a or the outer layer 11b may be a chalcogenide perovskite.

For example, the inner layer 11a of the particle body 11 in Fig. 1(b) functions as a light emission unit, and the outer layer 11b covering the inner layer 11a from the outside functions as a light absorption unit. Upon receiving excitation light, the particle body 11 emits light at the inner layer 11a or at the interface between the inner layer 11a and the outer layer 11b.

Both the inner layer 11a and the outer layer 11b of the particle body 11 are formed of a material that absorbs excitation light. The inner layer 11a and the outer layer 11b may have band alignment that induces a Stokes shift (energy difference between an absorption spectrum end and an emission spectrum peak). The particle body 11 may include a plurality of granular inner layers 11a.

In the particle body 11 shown in Fig. 1(b), one or both of the inner layer 11a and the outer layer 11b may contain a foreign substance that does not absorb and emit light, such as an insulator or other composition. The foreign substance is included in one or both of the inner layer 11a and the outer layer 11b of the particle body 11, as a result of which, for example, the light emission efficiency of the particle body 11 can be improved by scattering light, and the shape of the particle body 11 can be adjusted.

Here, when the particle body 11 has the inner layer 11a and the outer layer 11b, the combination of the material of the inner layer 11a and the material of the outer layer 11b is any one of the following combinations (i) to (iii):
(i) the material of the inner layer 11a is a chalcogenide perovskite, and the material of the outer layer 11b is a semiconductor material other than the chalcogenide perovskite;
(ii) the material of the inner layer 11a is a semiconductor material other than a chalcogenide perovskite, and the material of the outer layer 11b is the chalcogenide perovskite; and
(iii) the material of the inner layer 11a is a chalcogenide perovskite, and the material of the outer layer 11b is a chalcogenide perovskite different from that of the inner layer 11a.

The chalcogenide perovskite that can be applied to the inner layer 11a of the combination (i), the outer layer 11b of the combination (ii), or the inner layer 11a and the outer layer 11b of the combination (iii) is similar to that described in Fig. 1(a), and thus the repeated description is omitted.

Meanwhile, as the semiconductor material that can be applied to the outer layer 11b of the combination (i) or the inner layer 11a of the combination (ii), for example, a group II-VI semiconductor, a group III-V semiconductor, a group I-III-VI semiconductor, a group I-II-IV-VI semiconductor, a group IV-VI semiconductor, a halide perovskite semiconductor, an oxide perovskite, an organic-inorganic perovskite, Si, a carbon material, or a mixed crystal compound thereof may be used.

Furthermore, the semiconductor material that can be applied to the inner layer 11a of the combination (ii) may be a substance (so-called activated phosphor) prepared by adding an activator to a base crystal such as an oxide or a nitride to serve as a light emission center (light emitting ion).

In the case of the structures of the combinations (i) to (iii), in the particle body 11, the outer layer 11b as the light absorption unit and the inner layer 11a as the light emission unit can be separated. This makes it possible to take a large Stokes shift, and the absorbance can be gained by the outer layer 11b without enlarging the inner layer 11a. Therefore, in the particle body 11, high absorbance and high light emission efficiency can be achieved while suppressing light emission reabsorption loss by the inner layer 11a.

In addition, as in the structures of the combinations (i) and (iii), in a case where the chalcogenide perovskite is used as the material of the inner layer 11a, the light absorption coefficient of the inner layer 11a as the light emission unit can be increased, and the durability of the inner layer 11a against heat and other disturbances can be improved.

In addition, in a case where the chalcogenide perovskite is used as the material of the outer layer 11b as in the structures of the combinations (ii) and (iii), the durability of the particle body 11 against heat and other disturbances can be improved. In addition, photoexcited carriers are transported to the inner layer 11a by the outer layer 11b of the chalcogenide perovskite having high absorbance, and thus the light emission efficiency in the inner layer 11a can be enhanced.

### (Shell 12)

The shell 12 has a function of inactivating defects on the surface of the particle body 11 and suppressing non-radiative recombination of carriers generated in the particle body 11. The material of the shell 12 is formed of a semiconductor material that transmits excitation light without absorbing the excitation light, in order not to interfere with the absorption of the excitation light in the particle body 11. Here, the "semiconductor material that transmits excitation light without absorbing the excitation light" refers to a material having a band gap more than that of the excitation light.

For example, in a case where the excitation light has a wavelength in a visible region, the shell 12 has a band gap more than 2.7 eV and is formed of a material that transmits blue light (467 nm). In this regard, the shell 12 may have a band gap more than 2.7 eV by reducing the thickness of the shell 12 to cause a quantum size effect.

In a case where ultraviolet light (400 nm) is transmitted through the shell 12, the shell 12 preferably has a band gap of 3.1 eV or more. The shell 12 more preferably may have a band gap of 3.6 eV or more.

As the material of the shell 12, for example, a group II-VI semiconductor, a group III-V semiconductor, a group I-III-VI semiconductor, a group I-II-IV-VI semiconductor, a group IV-VI semiconductor, a halide perovskite semiconductor, an oxide perovskite, an organic-inorganic perovskite, Si, a carbon material, or a mixed crystal compound thereof may be used. The material of the shell 12 may be amorphous.

In addition, a chalcogenide perovskite can also be used as the material of the shell 12. When the entire particle body 11 or the outer layer 11b is formed of the chalcogenide perovskite, the shell 12 of the chalcogenide perovskite is formed, and thus defects at the interface between the particle body 11 and the shell 12 are reduced and non-emissive recombination can be reduced, from the viewpoint of affinity with constituent elements of the particle body 11 and matching between the crystal structure and the lattice constant. Thus, in the color conversion particle 10 of the present embodiment, higher light emission efficiency of the particle body 11 can be expected. In addition, when the entire particle body 11 or the outer layer 11b is formed of the chalcogenide perovskite, defects at the interface can be further reduced by forming a solid solution between the particle body 11 and the shell 12.

As an example, when the chalcogenide perovskite is used as the material of the shell 12, a material different from the material of the particle body 11 and having a band gap more than 2.7 eV can be selected from the following substances:
SrZrS₃, SrZrSe₃, SrHfS₃, SrHfSe₃, BaZrS₃, BaZrSe₃, BaHfS₃, BaHfSe₃, Sr₂Baₙ₋₁ZrₙS₃ₙ₊₁, Sr₂Baₙ₋₁ZrₙSe₃ₙ₊₁, Srₙ₊₁ZrₙS₃ₙ₊₁, Srₙ₊₁ZrₙSe₃ₙ₊₁, Ba₂Srₙ₋₁ZrₙS₃ₙ₊₁, Ba₂Srₙ₋₁ZrₙSe₃ₙ₊₁, Baₙ₊₁ZrₙS₃ₙ₊₁, Baₙ₊₁ZrₙSe₃ₙ₊₁, Sr₂Baₙ₋₁HfₙS₃ₙ₊₁, Sr₂Baₙ₋₁HfₙSe₃ₙ₊₁, Srₙ₊₁HfₙS₃ₙ₊₁, Srₙ₊₁HfₙSe₃ₙ₊₁, Ba₂Srₙ₋₁HfₙS₃ₙ₊₁, Ba₂Srₙ₋₁HfₙSe₃ₙ₊₁, Baₙ₊₁HfₙS₃ₙ₊₁, and Baₙ₊₁HfₙSe₃ₙ₊₁.

In addition, the band alignment of the particle body 11 and the shell 12 is preferably a Type-I band alignment. That is, it is preferable to satisfy the condition that energy at a lower end of a conduction band of the shell 12 is higher than energy at a lower end of a conduction band of the particle body 11, and energy at an upper end of a valence band of the shell 12 is lower than energy at an upper end of a valence band of the particle body 11. In the above case, since electrons and holes are confined in the particle body 11, light emission due to recombination of electrons and holes easily occurs in the particle body 11, and the light emission efficiency in the particle body 11 can be further improved.

### (Size of Color Conversion Particle 10)

Although not particularly limited, the size of the particle size at which the color conversion particles 10 can be stably present is preferably 1 nm or more.

In addition, in a case where the particle size of the color conversion particles 10 is extremely large, when a large number of the color conversion particles 10 are contained in a film, a coating film, a resin, or the like, the gap between the particles increases, and the density of the color conversion particles 10 decreases. In the case described above, eventually, the absorbance of the material for wavelength conversion using the color conversion particles 10 decreases.

Furthermore, in a case where an ink in which the color conversion particles 10 are dispersed in a solvent is applied by, for example, an inkjet method, when the particle size of the color conversion particles 10 is extremely large, clogging of the nozzle occurs. In other coating methods, the large particle size of the color conversion particles 10 may be a problem in the process.

For the above reason, the particle size of the color conversion particle 10 is preferably 500 nm or less, more preferably 100 nm or less, and still more preferably 20 nm or less.

### (Thickness of Shell 12)

The upper limit of the thickness of the shell 12 may be less than the upper limit of the size of the particle body 11. That is, the thickness of the shell 12 may be in a range of 1 to 250 nm. In addition, in a case where a desired band gap is exhibited in the color conversion particles 10 due to the quantum size effect, the thickness varies depending on the physical properties of the material to be used. Thus, although the thickness cannot be generally limited, the thickness of the shell 12 is preferably less than 15 nm.

### (Method for Producing Color Conversion Particle 10)

Next, a method for producing the color conversion particle 10 will be described. The color conversion particle 10 is produced by performing a second synthesis step of synthesizing the shell 12 after a first synthesis step of synthesizing the particle body 11.

### (First Synthesis Step)

In the first synthesis step of synthesizing the particle body 11, the particle body 11: a nano-light emitting particle is formed of a chalcogenide perovskite.

The chalcogenide perovskite according to the first synthesis step of this aspect can be synthesized by, for example, reacting a first metal atom-having complex and a second metal atom-having complex in a liquid phase, the complexes having a ligand free of oxygen atom (O) and halogen atom (X) as coordinating atoms, setting the temperature of the liquid phase to a range of 120°C to 450°C, and setting the reaction time to 0 seconds or longer. In this regard, the time point (0 second) is a time point at which the reaction between the first metal atom-having complex and the second metal atom-having complex starts. For example, in the hot injection method, the time point is a time point at which all of the first metal atom-having complex, the reaction start time point, and the second metal atom-having complex are present in the liquid phase. In the heat-up method, the time point is a time point at which the liquid phase reaches a predetermined temperature.

The present inventors have found that when a chalcogenide perovskite is synthesized in a liquid phase, for example, mixing of a component containing a halogen atom such as halide or a component containing oxygen atom (O) such as acetate during liquid-phase synthesis may inhibit the reaction, and the purity and crystal structure of the target chalcogenide perovskite are affected.

Examples of the halogen atom include fluorine atom (F), chlorine atom (Cl), bromine atom (Br), and iodine atom (I).

In the first synthesis step of this aspect, the first metal atom-having complex and the second metal atom-having complex, the complexes having a ligand free of oxygen atom and halogen atom as coordinating atoms, are reacted in a liquid phase, and thus the liquid-phase synthesis reaction can be allowed to proceed without causing a component containing oxygen atom such as metallic acetate or a component containing halogen atom such as metal halide to be present in the liquid phase. Accordingly, it is possible to suppress the reaction of the constituent elements of the chalcogenide perovskite with oxygen atom and halogen atom in the liquid phase. As a result, a crystal structure similar to that of the solid-phase synthesis can be expressed.

Hereinafter, a method for synthesizing starting materials: the first metal atom-having complex and the second metal atom-having complex, and a method for synthesizing a chalcogenide perovskite will be described.

### [First Metal Atom-Having Complex and Second Metal Atom-Having Complex]

The ligand of the first metal atom-having complex and the ligand of the second metal atom-having complex used in the first synthesis step of this aspect are not particularly limited as long as the complexes contain no coordinating atoms, i.e. neither oxygen atom nor halogen atom. Examples thereof include ligands coordinated with atom selected from the group consisting of nitrogen atom (N), sulfur atom (S), selenium atom (Se), tellurium atom (Te), carbon atom (C), and phosphorus atom (P).

Examples of the ligand coordinating with nitrogen atom include alkylamines (NR₂) such as amine, dimethylamine, diethylamine, and methylethylamine; arylamine (NHAr) such as phenylamine; trialkylsilyl amines (N(SiR₃)₂) such as silyl amine and trimethylsilyl amine, and nitrogen-containing aromatic rings such as pyrazole.

Examples of the ligand coordinating with sulfur atom include dithiocarbamate (S₂CNR₂), xanthate (S₂COR), trithiocarbamate (S₂CSR), dithioester (S₂CR), and thiolate (SR).

Examples of the ligand coordinating with selenium atom or tellurium atom include compound in which a part or all of sulfur atom of the ligand coordinating with sulfur atom is substituted with selenium atom or tellurium atom.

The first metal atom-having complex and the second metal atom-having complex may be a single compound (dinuclear complex). Preferably, the first metal atom and the second metal atom may be bonded via the ligand coordinated with sulfur atom, selenium atom, or tellurium atom.

Examples of the dinuclear complex in which the ligand is coordinated with sulfur atom include heterobimetallic thiolate and heterobimetallic sulfide.

The dinuclear complex in which the ligand is coordinated with selenium atom or tellurium atom is, for example, a dinuclear complex in which a part or all of sulfur atom in the dinuclear complex in which the ligand is coordinated with sulfur atom is substituted with selenium atom or tellurium atom.

Examples of the ligand coordinating with carbon atom include alkanes such as methyl and ethyl; unsaturated hydrocarbon rings such as cyclopentadiene, cyclooctadiene, and indene; and groups derived from benzyl groups and unsaturated hydrocarbon rings described above; and cyan (CN).

Examples of the ligand coordinating with phosphorus atom include trialkylphosphines (PR₃) such as trioctylphosphine and tricyclohexylphosphine; triarylphosphines (PAr₃) such as triphenylphosphine and tri (o-tolyl) phosphine; and diphosphines (R₂P-(CH₂)ₘ-PR₂).

The ligand may be a derivative of the ligand described above.

In each of the Formulae described above, R is a hydrogen atom, a saturated hydrocarbon group having 1 to 20 carbon atoms, or an unsaturated hydrocarbon. When one ligand contains two or more Rs, Rs may be identical to or different from each other.

Ar is an aryl group having 6 to 20 carbon atoms which may have a substituent, such as a phenyl group, a naphthyl group, or an anthracenyl group. Examples of the substituent include an alkyl group having 1 to 10 carbon atoms. When one ligand contains two or more Ars, Ars may be identical to or different from each other.

m is an integer of 1 to 10.

Among the ligands described above, the ligand coordinating with nitrogen atom or the ligand coordinating with sulfur atom are preferred.

In addition, a ligand having a structure selected from the group consisting of the following Formulae (1) to (7) is preferred.

S₂CNR^{a}₂ (1)

S₂COR (2)

S₂CSR^{a} (3)

S₂CR^{a} (4)

SR^{a} (5)

NR^{a}₂ (6)

N(SiR^{a}₃)₂ (7)

(wherein R^{a} is a hydrogen atom, a saturated hydrocarbon group having 1 to 20 carbon atoms, or an unsaturated hydrocarbon group having 1 to 20 carbon atoms. When one ligand has a plurality of R^{a}, the plurality of R^{a} may be identical to or different from each other or one another.)

Examples of the saturated hydrocarbon group and the unsaturated hydrocarbon include an alkyl group having 1 to 20 carbon atoms, a cycloalkyl group having 3 to 20 carbon atoms, an alkenyl group having 2 to 20 carbon atoms, an alkynyl group having 2 to 20 carbon atoms, a cycloalkenyl group having 3 to 20 carbon atoms, a cycloalkynyl group having 3 to 20 carbon atoms, a cycloalkadienyl group having 3 to 20 carbon atoms, and an aryl group having 6 to 20 carbon atoms.

The saturated hydrocarbon group and the unsaturated hydrocarbon may have a substituent. Examples of the substituent include an alkyl group having 1 to 10 carbon atoms.

In an embodiment, the ligand is preferably a compound represented by Formula (1) above. R^{a} in Formula (1) is preferably an alkyl group having 1 to 10 carbon atoms, more preferably an alkyl group having 2 to 6 carbon atoms.

The ligand used in the first synthesis step of the present aspect can be synthesized in accordance with an ordinary method. Alternatively, a commercially available compound may be used.

The metal atom of the first metal atom-having complex is a metal atom selected from alkaline earth metal elements, and the metal atom of the second metal atom-having complex is metal atom selected from transition metal elements.

In one embodiment, the metal atom of the first metal atom-having complex is at least one of Mg, Ca, Sr, or Ba, and the metal atom of the second metal atom-having complex is at least one of Ti, Zr, or Hf.

The first metal atom-having complex and the second metal atom-having complex can be synthesized by selecting raw material components according to the types of metal atoms and ligands included in each of the complexes and using a known method. Alternatively, a commercially available metal complex may be used.

Hereinafter, as an example of a method for synthesizing the first metal atom-having complex and the second metal atom-having complex, synthesis of a metal complex ((M(S₂CNR₂)_{X}) having a ligand (S₂CNR₂) represented by Formula (1) will be described.

First, as a metal raw material (M) which is a source of the metal atom of the metal complex, at least one selected from, for example, Ba, Sr, Ca, Mg, Ti, Zr, and Hf or a salt thereof is dissolved in a solvent such as water.

The solvent is not particularly limited as long as it can dissolve the metal raw material (M), and may be, for example, an organic solvent.

Then, to the solution dissolving the metal raw material, ammonia or an amine compound is added as a source of nitrogen (N) contained in the complex ligand to be synthesized, and the resulting mixture is stirred.

As the amine compound, a primary amine or a secondary amine can be used without any particular limitation, and the type of the substituted hydrocarbon group and the like in these amine compounds are not particularly limited.

Next, the solution to which the source of nitrogen (N) has been added, a source of sulfur (S) contained in the complex ligand to be synthesized is further added, and the resulting mixture is stirred.

Examples of the source of sulfur (S) typically include CS₂, and other compounds can be used depending on the composition of the complex ligand to be synthesized. When Se or Te is contained in place of sulfur (S), CSe₂ or CTe₂ can be used.

Then, the solid formed by stirring or the precipitate precipitated in the solution can be isolated by known methods to form a desired metal complex.

### [Method for Synthesizing Chalcogenide Perovskite]

In this aspect, the chalcogenide perovskite is synthesized by reacting the first metal atom-having complex and the second metal atom-having complex described above in a solvent.

The solvent can be appropriately selected from the viewpoints of solubility of the first metal atom-having complex and the second metal atom-having complex, H₂S generation efficiency, and the like.

Examples of the solvent include saturated aliphatic hydrocarbons, unsaturated aliphatic hydrocarbons, aromatic hydrocarbons, nitrogen-containing heterocyclic compounds, alcohols, aldehydes, carboxylic acids, primary amines, secondary amines, tertiary amines, phosphine compounds, and thiols.

As the solvent, a solvent having a higher boiling point is preferably used in consideration of the fact that the liquid phase may be heated to a high temperature of, for example, 300°C or higher in the liquid-phase synthesis stage described later.

For example, an alkene having 10 to 30 carbon atoms such as octadecene has a high boiling point, and thus can be suitably used as a solvent.

In one embodiment, in addition to the first metal atom-having complex and the second metal atom-having complex, a chalcogen compound can be further added to the liquid phase. For example, in a case where the ligands of the first metal atom-having complex and the second metal atom-having complex do not have a chalcogen element such as sulfur (S) or it is insufficient in the chalcogen element of the ligand, the chalcogen compound is added to the liquid phase, and thus the composition of the target chalcogenide perovskite can be adjusted.

As the chalcogen compound, a chalcogen compound that contain neither oxygen atom (O) nor halogen atom is preferably used. Examples of the chalcogen compound described above include sulfur, sulfides such as carbon disulfide (CS₂) or hydrogen sulfide (H₂S), selenium or selenide, tellurium or telluride, hexanethiol, octanethiol, decanethiol, dodecanethiol (n-dodecanethiol, t-dodecanethiol), hexadecanethiol, mercaptopropylsilane, thiourea compound (S=C(NR₂)₂), sulfur-trioctylphosphine (trioctylphosphine sulfide; S-TOP), sulfur-tributylphosphine (S-TBP), sulfur-triphenylphosphine (S-TPP), sulfur-trioctylamine (S-TOA), bis(trimethylsilyl)sulfide, ammonium sulfide, sodium sulfide, selenium-trioctylphosphine (Se-TOP), selenium-tributylphosphine (Se-TBP), and selenium-triphenylphosphine.

Among them, a thiourea compound (S=C(NR₂) has a boiling point higher than that of carbon disulfide (CS₂), and thus can be suitably used as a chalcogen compound.

In one embodiment, in addition to the first metal atom-having complex and the second metal atom-having complex described above, an amine-based compound can be further added to the liquid phase. The amine-based compound functions as a reaction initiator. The amine-based compound may be used as the solvent described above.

As the amine-based compound, an amine-based compound that contain neither oxygen atom (O) nor halogen atom is preferably used. Examples of the amine-based compound described above include alkylamine having one alkyl group, such as oleylamine, hexadecylamine, and octadecylamine; dialkylamine containing two alkyl groups each having 1 to 30 carbon atoms; and trialkylamine containing three alkyl groups each having 1 to 30 carbon atoms (e.g. trioctylamine).

From the viewpoint of sufficiently achieving the function as a reaction initiator of the ligand and the metal component, it is preferable that the amine-based compound is added in an amount equal to or more than the total amount of the number of ligands contained in the first metal atom-having complex and the second metal atom-having complex added in the liquid phase.

In addition, the amine-based compound may be added to the liquid phase in an excessively larger amount than the above-described amount (an equal amount to the total amount of the number of ligands) from the viewpoint of achieving a function as a surfactant adhering to the particle surface of the finally prepared chalcogenide perovskite.

In the first synthesis step of this aspect, the first metal atom-having complex and the second metal atom-having complex described above, and the chalcogen compound and the amine-based compound as necessary may be reacted in a liquid phase, and the procedure and the like are not particularly limited. The synthesis of this aspect can be performed by a known method such as a hot injection method, a heat-up method, or a flow synthesis method.

The compounding ratio of the first metal atom-having complex and the second metal atom-having complex can be adjusted in accordance with the composition of the target chalcogenide perovskite.

In the first synthesis step according to one embodiment, when a raw material component containing at least the first metal atom-having complex, the second metal atom-having complex, and a solvent is used, a first raw material containing at least the solvent among the components of the raw material composition and a second raw material containing at least the rest of the components of the raw material composition, which is not contained in the first raw material among the above-described components of the raw material composition are prepared. Then, a second raw material is added to the first raw material to cause a reaction.

In the present embodiment, it is preferable that the second raw material is added to the first raw material in a state where at least one of the first raw material or the second raw material is heated in advance.

Alternatively, a second raw material may be added to the first raw material and then the mixture is heated to cause a reaction.

Hereinafter, the first synthesis step of this aspect will be described by taking a case where the synthesis is performed using a hot injection method as an example.

First, the first raw material is heated in advance. The heating rate is not particularly limited, and heating is performed at a heating rate of, for example, 1 to 30°C/min, typically 1 to 10°C/min.

The temperature of the first raw material after heating is not particularly limited, and may be, for example, room temperature to 450°C or 120 to 360°C.

Then, a second raw material is added to the first raw material to cause a reaction between the first metal atom-having complex and the second metal atom-having complex. The second raw material may be heated in advance in a similar manner to the first raw material. The addition rate of the second raw material is not particularly limited, but is preferably adjusted in consideration of the temperature drop of the liquid phase due to the addition of the second raw material.

The liquid phase temperature after mixing is 120 to 450°C, preferably 120 to 400°C, and more preferably 220 to 360°C.

For example, in a case where either the first metal atom-having complex or the second metal atom-having complex has the ligand (dithiocarbamate (S₂CNR₂))) represented by Formula (1) above, when the temperature of the liquid phase is 120°C or higher, the reaction between the first metal atom-having complex and the second metal atom-having complex proceeds smoothly because the metal complex having the ligand can initiate the reaction with the amine-based compound. The reaction can be started without using the amine-based compound. In this case, the temperature of the liquid phase is preferably higher than 120°C.

In addition, when the temperature of the liquid phase is 360°C or lower, vaporization of a commonly used solvent is suppressed, and stable liquid-phase synthesis can be performed.

In the present embodiment, the second raw material is added to the first raw material in a state where the first raw material is heated in advance, and thus when all the components contributing to the synthesis of the chalcogenide perovskite (the solvent, the first metal atom-having complex, and the second metal atom-having complex) present in the liquid phase are brought to a high temperature at once. Accordingly, the reaction start time point of the first metal atom-having complex and the reaction start time point of the second metal atom-having complex can be at approximately the same level. Consequently, the reaction of the first metal atom-having complex and the reaction of the second metal atom-having complex proceed in a well-balanced manner, and the chalcogenide perovskite can be synthesized with high purity.

When the above-described amine-based compound is added to the liquid phase as a reaction initiator, the raw material component contains a solvent, the first metal atom-having complex, the second metal atom-having complex, and the amine-based compound. The combination of the component to be used as the first raw material and the component to be used as the second raw material is not particularly limited.

For example, the first raw material may be a solvent alone, and the second raw material may be a mixture of the first metal atom-having complex, the second metal atom-having complex, and the amine-based compound.

The first raw material may be a mixture of a solvent and the amine-based compound, and the second raw material may be a mixture of the first metal atom-having complex and the second metal atom-having complex.

Alternatively, the first raw material may be a mixture of one of the first metal atom-having complex and the second metal atom-having complex, and a solvent, and the second raw material may be a mixture of the other of the first metal atom-having complex and the second metal atom-having complex, and the amine-based compound.

When the chalcogen compound described above is added to the liquid phase, the raw material component contains a solvent, the first metal atom-having complex, the second metal atom-having complex, and the chalcogen compound.

In this case, the combination of the component to be used as the first raw material and the component to be used as the second raw material is not particularly limited.

For example, the first raw material may be a solvent alone, and the second raw material may be a mixture of the first metal atom-having complex, the second metal atom-having complex, and the chalcogen compound.

Alternatively, the first raw material may be a mixture of a solvent and the chalcogen compound, and the second raw material may be a mixture of the first metal atom-having complex and the second metal atom-having complex.

Alternatively, the first raw material may be a mixture of one of the first metal atom-having complex and the second metal atom-having complex, and a solvent, and the second raw material may be a mixture of the other of the first metal atom-having complex and the second metal atom-having complex, and the chalcogen compound.

The liquid phase formed by adding the second raw material to the first raw material is heated and stirred for 0 second or longer, preferably 10 hours or longer and 24 hours or shorter while being maintained at a temperature of 120 to 450°C, preferably 120 to 400°C, and more preferably 220 to 360°C. After completion of stirring, the precipitate precipitated in the liquid phase is isolated by a known method to form target chalcogenide perovskite particles.

In the series of liquid-phase synthesis as described above, it is preferable to perform the synthesis in a state in which components such as water and oxygen are removed as much as possible such that these components are not present in the synthesis atmosphere. For example, the above-described series of liquid-phase synthesis is preferably performed under an inert atmosphere filled with nitrogen or argon.

The first synthesis step of this aspect may be performed, for example, by a flow synthesis method described below.

First, the first metal atom-having complex, the second metal atom-having complex, and at least one of the chalcogen compound or the amine-based compound are dissolved in solvents, respectively, and are separately circulated as raw material flows of three lines or four lines.

The reaction is then initiated by merging all the raw material flows simultaneously or stepwise. At this time, it is preferable that at least one of the raw material flows is heated in advance before merging. The pre-heated raw material flow is preferably the flow with the highest flow rate. In addition, since the flow synthesis has a small reaction field, the flow can be instantaneously heated even when it is heated immediately after the merging of the raw material flows. Thus, the reaction start time point of the first metal atom-having complex and the reaction start time point of the second metal atom-having complex can be at approximately the same level. The heating rate at the time of heating and the temperature of the component after heating are the same as those in the hot injection method. The following steps are similar to the hot injection method.

According to the flow synthesis method, since the components contributing to the synthesis of the chalcogenide perovskite can be heated in a short time after merging, the reaction start time point of the first metal atom-having complex and the reaction start time point of the second metal atom-having complex can be at approximately the same level. Further, since the flow synthesis has a small reaction field, the collision probability between the raw materials, that is, the reaction efficiency is high. Consequently, the reaction of the first metal atom-having complex and the reaction of the second metal atom-having complex proceed in a well-balanced manner, and the chalcogenide perovskite can be synthesized with high purity.

In addition, the yield of the chalcogenide perovskite is increased, and the energy cost can be reduced. In addition, since the amount of waste impurities contained in the finally synthesized product can be reduced, the environmental load can be reduced. In addition, since an accident such as an explosion on a production line caused by impurities can be prevented, safety in producing is enhanced.

In the first synthesis step of this aspect described above, chalcogenide perovskite particles can be formed without performing the calcination step. In general, when the calcination step is performed, nano-sized primary particles are aggregated to form secondary particles, but the formation of such secondary particles is suppressed by not performing the calcination step. Accordingly, fine chalcogenide perovskite nanoparticles can be formed.

Since the first synthesis step of this aspect described above is performed by the liquid-phase synthesis method, impurities are less likely to be mixed in the particles in the synthesis process, as compared with the solid-phase synthesis method. In addition, since the liquid-phase synthesis method is characterized by uniform nucleation and particle growth from the liquid phase, fine nanoparticles with narrow particle size distribution can be formed by preventing aggregation of nuclei generated in the liquid phase (see, for example, "Kiyoshi Kanie et al., "Liquid-phase synthesis of size- and morphology-controlled functional inorganic nanoparticles and their development into a hybrid material by surface-precise organic modification", Journal of the Japanese Association for Crystal Growth, 2017, Vol. 44, No. 2, p. 66-73").

Therefore, according to the first synthesis step of this aspect, it is possible to form chalcogenide perovskite nanoparticles that are less contaminated with impurities in the particles and have narrow and uniform particle size distribution.

When the particle body 11 having the inner layer 11a and the outer layer 11b is produced in the first synthesis step, the following method may be used. First, the inner layer 11a is produced by the method for producing nanoparticles described above. However, the inner layer 11a in this case may not necessarily be chalcogenide perovskite nanoparticles. Thereafter, the outer layer 11b may be synthesized outside the inner layer 11a by the method described below.

As an example of the step of synthesizing the outer layer 11b, a case in which a hot injection method is used will be described. In the case of the hot injection method, a solution that contains a precursor compound containing an anion element or a precursor compound containing an anion and a solvent is reacted with a solution that contains nanoparticles forming the inner layer 11a, a precursor compound containing a metal element, and a solvent, in a reaction vessel at a temperature in a range of 50°C to 350°C for 0 to 100 hours. Thus, a target product: the particle body 11 having the inner layer 11a and the outer layer 11b can be synthesized. After completion of the reaction, the reaction product is washed with an organic solvent or water, and then the target particle body 11 is recovered.

Examples of the precursor compound containing a metal element include metal powders, alkylated metal compounds, metal alkoxides, metal carboxylates, metal nitrates, metal perchlorates, metal sulfates, metal acetylacetonate, metal halides, metal cyanides, metal hydroxides, metal sulfides, metal halides, and combinations thereof.

As the precursor compound containing an anion element, an anion element simple substance or a compound containing an anion element can be used. For example, when the anionic element is chalcogen, examples thereof include metal sulfides, carbon disulfide, hydrogen sulfide, hydrogen selenide, hydrogen telluride, thiol compounds, phosphine compounds, sulfur, selenium, tellurium, those prepared by dispersing these compounds in an amine or an acid solvent, and combinations thereof.

Examples of the solvent include commonly used organic solvents such as primary amine having a hydrocarbon group, secondary amine having a hydrocarbon group, tertiary amine having a hydrocarbon group, aromatic hydrocarbon, nitrogen-containing heterocyclic compound, sulfur-containing heterocyclic compound, aliphatic hydrocarbon, phosphine compound having a hydrocarbon group, phosphine oxide compound having a hydrocarbon group, carboxylic acid compound having a hydrocarbon group; and water (or a combination of these solvents).

In the synthesis of the outer layer 11b, the target particle body 11 can be formed through a nuclear growth process in which the outer layer 11b grows on the nanoparticles of the inner layer 11a used in the reaction. The above reaction includes synthesis of a target product in a continuous flow process using a microreaction vessel. Further, the above reaction includes synthesis under an inert atmosphere or an air atmosphere. Furthermore, the above reaction includes synthesis of nanoparticles to be the inner layer 11a and continuous synthesis of the outer layer 11b. Additionally, the above reaction includes synthesis of nanoparticles to be the inner layer 11a, and synthesis of the particle body 11 by adding the precursor of the outer layer 11b to the reaction vessel.

### (Second Synthesis Step)

In the second synthesis step of synthesizing the shell 12, the shell 12 is synthesized on the surface of the particle body 11 of the chalcogenide perovskite prepared in the first synthesis step. For example, the color conversion particles 10 may be synthesized by depositing a shell material on the surface of the particle body 11 by a vapor-phase growth method such as an ALD method or a CVD method.

In the synthesis of the shell 12, a one-pot synthesis method or a hot injection method may be used. In this case, a nano-light emitting particle to be the particle body 11 and the precursor of the shell material are mixed in a solvent. Thus, the color conversion particle 10 in which the surface of the particle body 11 is coated with the shell material is synthesized. The one-pot synthesis method and the hot injection method can also be used in the case of forming the shell 12 of chalcogenide perovskite.

Alternatively, in the second synthesis step, the shell 12 may be synthesized in a similar step to the formation of the outer layer 11b using the hot injection method. For example, when the hot injection method is used as an example of the second synthesis step, a solution that contains a precursor compound containing an anion element or a precursor compound containing an anion and a solvent is reacted with a solution that contains a precursor compound containing the particle body 11 and a metal element, and a solvent, in a reaction vessel at a temperature in a range of 50°C to 350°C for 0 to 100 hours. As a result, the target color conversion particle 10 having the particle body 11 and the shell 12 can be synthesized. After completion of the reaction, the reaction product is washed with an organic solvent or water, and then the target color conversion particles 10 are recovered. Examples of the precursor compound containing a metal element, the precursor compound containing an anion element, and the solvent are the same as those in the case of the outer layer 11b.

In the second synthesis step, the target color conversion particle 10 can be formed through a nuclear growth process in which the shell 12 grows on the nanoparticles of the particle body 11 used in the reaction. The above reaction includes synthesis of a target product in a continuous flow process using a microreaction vessel. Further, the above reaction includes synthesis under an inert atmosphere or an air atmosphere. Furthermore, the above reaction includes synthesis of nanoparticles to be the particle body 11 and continuous synthesis of the shell 12. Additionally, the above reaction includes synthesis of nanoparticles to be the particle body 11, and synthesis of the color conversion particle 10 by adding the precursor of the shell 12 to the reaction vessel.

Hereinafter, effects of the color conversion particle 10 of the present embodiment will be described.

The color conversion particle 10 of the present embodiment includes a particle body 11 that contains a chalcogenide perovskite and emits light in response to excitation light received, and a shell 12 that is formed of a semiconductor material for transmitting the excitation light and covers the particle body 11 to inactivate defects on the surface of the particle body 11. The shell 12 has a band gap more than 2.7 eV.

In the present embodiment, since the particle body 11 contains the chalcogenide perovskite, the particle body 10 has high light absorption performance and high durability against heat and light as compared with particles of other materials.

For example, when the color conversion particle 10 of the present embodiment is applied to various devices such as a display device and a lighting device, it is easier to perform color conversion without transmitting blue excitation light due to high light absorption performance. Further, for example, when the color conversion particle 10 of the present embodiment is applied to various devices such as a display device and a lighting device, the color conversion layers of devices can be thinned, which is advantageous in terms of cost and production of devices.

Furthermore, since the color conversion particle 10 of the present embodiment has high durability against heat and light, it is also suitable for use in an environment with light irradiation at a high temperature, for example, when a micro LED is in operation.

In addition, the color conversion particle 10 of the present embodiment has the shell 12 that covers the particle body 11 and inactivates defects on the surface of the particle body 11. Thus, according to the present embodiment, non-radiative recombination of carriers on the particle surface is suppressed by the shell 12, the emission intensity of the particle body 11 can be improved as compared with the case where the shell 12 is not provided.

The shell 12 is formed of a semiconductor material for transmitting the excitation light, and has a band gap more than 2.7 eV. Accordingly, excitation light in a visible region is not absorbed by the shell 12, and thus the formation of the shell 12 does not suppress the emission intensity of the color conversion particle 10.

### <Product Form and Application Example of Color Conversion Particle 10 >

Next, a product form and an application example of the color conversion particle 10 will be described. Examples of the product form of the color conversion particle 10 include a powder, a solution, a thin film, and a sheet. As an application example of the color conversion particle 10, application to various devices is assumed.

### (Powder)

The powder is in a state in which the color conversion particles 10 are aggregated. Hereinafter, the color conversion particles 10 may be referred to as primary particles, and those in which the color conversion particles 10 are aggregated may be referred to as secondary particles. The sizes of the primary particles and the secondary particles are not particularly limited, but the size of the primary particles is preferably in a range of 5 nm to 1000 nm. In addition, a ligand may be given to the surface of the primary particle or the secondary particle. In order to improve characteristics such as light emission characteristics, dispersibility of the color conversion particles, and film formability, another material may be added to the powder of the color conversion particles 10 as an additive.

The application of the powder of the color conversion particles 10 is not particularly limited. For example, the color conversion particles may be dispersed in a solvent to prepare a solution, the color conversion particles may be dispersed in a resin or a solid medium to prepare a composite, a sputtering target may be used as a sintered body, or the color conversion particles in the form of powder may be used as a source of a vapor deposition source or the like.

### (Solution)

The solution is in a state in which the color conversion particles 10 are dispersed in a solvent. The sizes of the primary particles and the secondary particles are not particularly limited, but the size of the primary particles is preferably in a range of 5 nm to 1000 nm. The term "dispersed" refers to a state in which the color conversion particles 10 are floating or suspended in a solvent, and a part thereof may be settled. In addition, a ligand may be given to the surface of the primary particle or the secondary particle.

As the solvent of the solution, one or more types of solvents may be used. Examples of the type of the solvent include, but are not limited to, solvents described below.

Water, esters such as methyl formate, ethyl formate, propyl formate, pentyl formate, methyl acetate, ethyl acetate, and pentyl acetate; ketones such as γ-butyrolactone, acetone, dimethyl ketone, diisobutyl ketone, cyclopentanone, cyclohexanone, and methylcyclohexanone; ethers such as diethyl ether, methyl-tert-butyl ether, diisopropyl ether, dimethoxymethane, dimethoxyethane, 1,4-dioxane, 1,3-dioxolane, 4-methyldioxolane, tetrahydrofuran, methyltetrahydrofuran, anisole, and phenetol; alcohols such as methanol, ethanol, 1-propanol, 2-propanol, 1-butanol, 2-butanol, tert-butanol, 1-pentanol, 2-methyl-2-butanol, methoxypropanol, diacetone alcohol, cyclohexanol, 2-fluoroethanol, 2,2,2-trifluoroethanol, and 2,2,3,3-tetrafluoro-1-propanol; glycol ethers such as ethylene glycol monomethyl ether, ethylene glycol monoethyl ether, ethylene glycol monobutyl ether, ethylene glycol monoethyl ether acetate, and triethylene glycol dimethyl ether; organic solvents having an amide group such as N-methyl-2-pyrrolidone, N,N-dimethylformamide, acetamide, and N,N-dimethylacetamide; organic solvents having a nitrile group, such as acetonitrile, isobutyronitrile, propionitrile, or methoxyacetonitrile; organic solvents having a carbonate group such as ethylene carbonate or propylene carbonate; organic solvents having a halogenated hydrocarbon group such as methylene chloride or chloroform; organic solvents having a hydrocarbon group such as n-pentane, cyclohexane, n-hexane, benzene, toluene, or xylene; and dimethyl sulfoxide.

In addition, an acid, a base, a binder material, or the like may be added to the above solution as an additive in order to improve characteristics such as light emission characteristics, dispersibility of the color conversion particles 10, and film formability.

The application of the solution is not particularly limited. For example, the solution may be used for film formation by a coating method, a spraying method, or a doctor blade method (other solution film formation methods), preparation of a composite by compounding with a solid dispersion medium, or preparation of a device using them.

### (Thin Film)

The thin film refers to a state where the color conversion particles 10 are aggregated in a planar shape. The sizes of the primary particles and the secondary particles are not particularly limited, but the size of the primary particles is preferably in a range of 5 nm to 1000 nm. In addition, a ligand may be given to the surface of the primary particle or the secondary particle. In order to improve characteristics such as light emission characteristics and dispersibility of the color conversion particles 10, another material may be added to the thin film as an additive.

The method for producing the thin film is not particularly limited. For example, the thin film may be prepared by producing a film using a coating method, a spraying method, a doctor blade method, an inkjet method, other solution film formation methods, using a vacuum process such as a sputtering method or a vacuum vapor deposition method. In addition, the color conversion particles 10 may be formed into a film by coating or other methods, and is allowed to be in a state in which the particle shape is not maintained due to the subsequent calcination or other processing.

### (Sheet)

The sheet is in a state in which a dispersion medium containing the color conversion particles 10 dispersed is formed in a planar shape. The sizes of the primary particles and the secondary particles are not particularly limited, but the size of the primary particles is preferably in a range of 5 nm to 1000 nm. In addition, a ligand may be given to the surface of the primary particle or the secondary particle.

As the material used as the dispersion medium of the sheet, a polymer well known to those skilled in the art that may be used for this type of purpose can be arbitrarily applied. In a suitable embodiment, polymers of this type are substantially translucent or substantially transparent.

Examples of polymers applicable as a dispersion medium of a sheet include, but are not limited to, polyvinyl butyral, polyvinyl acetate, silicone, and derivatives of silicone. In addition, examples of derivatives of silicone include, but are not limited to, polyphenylmethylsiloxane, polyphenylalkylsiloxane, polydiphenylsiloxane, polydialkylsiloxane, fluorinated silicones and vinyl and hydride substituted silicones, ionomers, polyethylene, polyvinyl chloride, polyvinylidene chloride, polyvinyl alcohol, polypropylene, polyester, polycarbonate, polystyrene, polyacrylonitrile, ethylene vinyl acetate copolymer, ethylene-vinyl alcohol copolymer, ethylene-methacrylic acid copolymer film, and nylon.

In order to improve characteristics such as light emission characteristics and dispersibility of the color conversion particles 10, silica fine particles or other materials such as the solvent described in the above solution may be added to the sheet as an additive.

The method for producing the sheet is not particularly limited. For example, a sheet may be produced by kneading and stretching a powder and a dispersion medium, or a sheet may be produced by mixing and applying an ink containing the color conversion particles 10 and a dispersion medium or a precursor thereof.

### (Device)

As an application of the color conversion particles 10, or the powder, solution, film, or sheet described above, application to down-conversion such as ultraviolet light or blue light in various devices is assumed. Examples of the type of device include a light emitting device such as an LED or an organic EL, a display device including the light emitting device, a lighting device including the light emitting device, an image sensor, a photoelectric conversion device, a bioluminescent label, and the like.

### Examples

Hereinafter, examples of the color conversion particle of the present invention will be described. In the color conversion particles of Examples, the particle body is BaZrS₃, and the shell is ZnS. The band gap of ZnS is 3.6 eV.

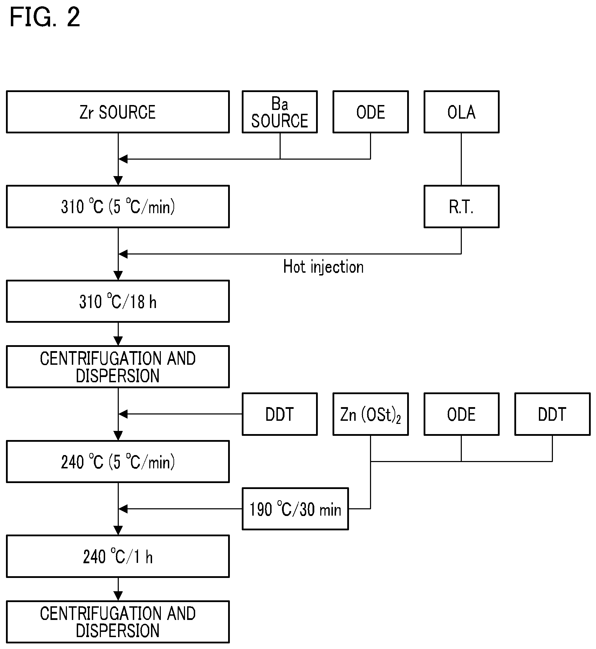

Fig. 2 is a diagram showing a procedure for producing color conversion particles in Examples. In Examples, color conversion particles were formed by the liquid-phase synthesis method in accordance with the following procedure.

First, Ba diisobutyl dithiocarbamate (527.94 mg) and Zr diisobutyl dithiocarbamate (908.76 mg) were weighed in a 50 ml three-necked flask, and 1-octadecene (ODE: 5 ml) was added thereto, and the resulting mixture was stirred. Next, the three-necked flask was moved into the draft while the internal atmosphere was maintained at N₂ atmosphere. The temperature was increased to 310°C at a heating rate of 5°C/min, and then oleylamine (OLA: 3200 mg) at normal temperature was injected into the three-necked flask with a Luer-lock syringe.

Thereafter, the solution in the three-necked flask was stirred for 18 hours while being maintained at 310°C, and then cooled to room temperature. Then, the solution in the three-necked flask was divided into two solutions. Butanol was added to one of the solutions, thereby inducing precipitation of the mixture, and synthesized product powder (BaZrS₃ powder) was recovered by centrifugation. Toluene and ethanol were added to the other solution, thereby inducing precipitation of the mixture, and the resulting mixture was subjected to centrifugation. Then, the supernatant was discarded, the residue was dispersed in toluene, and thus a dispersion of synthesized product (BaZrS₃ dispersion) was prepared.

In addition, a BaZrS₃ dispersion (0.5 ml) was added to dodecanethiol (DDT: 5.0 ml), vacuuming was performed at 80°C for 30 minutes, and then the temperature was increased to 240°C at a heating rate of 5°C/min. When the temperature was stabilized, a Zn solution prepared in another three-necked flask was added to the solution prepared by adding the BaZrS₃ dispersion to dodecanethiol at 1 ml/min, and the resulting mixture was heated and stirred for 1 hour. The Zn solution was prepared by adding Zn(OSt)₂ (2529 mg) to dodecanethiol (0.96 ml) and octadecene (4.0 ml) and holding the mixture at 190°C for 30 minutes.

Then, the solution after the reaction was allowed to cool to room temperature. Excess methanol was added to the resulting solution, the aggregate was centrifuged, the supernatant liquid was removed, and then toluene was added thereto for dispersion. This operation was repeated several times to prepare a powder of color conversion particles of Example (synthesized product: BaZrS₃/ZnS powder). The powder was dispersed in toluene to prepare a dispersion of color conversion particles (BaZrS₃/ZnS dispersion).

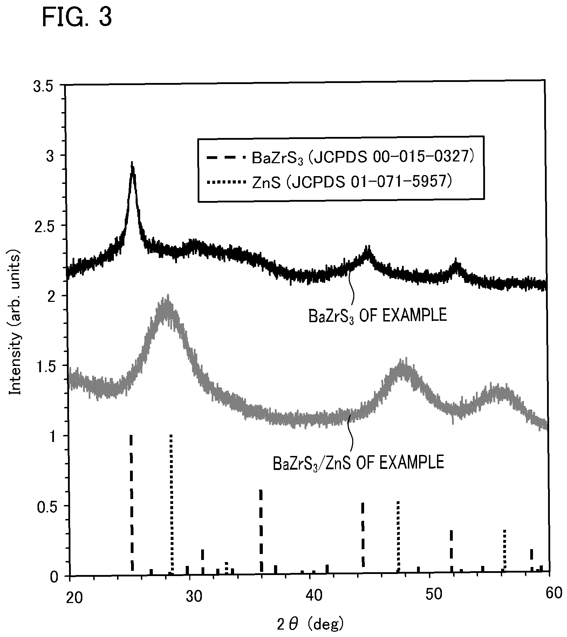

Fig. 3 is a graph showing analysis results by an X-ray diffractometer (XRD) in Examples. In the BaZrS₃ powder prepared in Example, the profile of the X-ray diffraction intensity is well matched with the characteristics of JCPDS data of BaZrS₃. Accordingly, it can be confirmed that BaZrS₃, which is the particle body, has been synthesized in the process of Example.

In addition, in the BaZrS₃/ZnS powder prepared in Example, the profile of the X-ray diffraction intensity is well matched with the characteristics of the JCPDS data of ZnS. Accordingly, it can be confirmed that the shell of ZnS has been formed on the surface of the particle body in the process of Example.

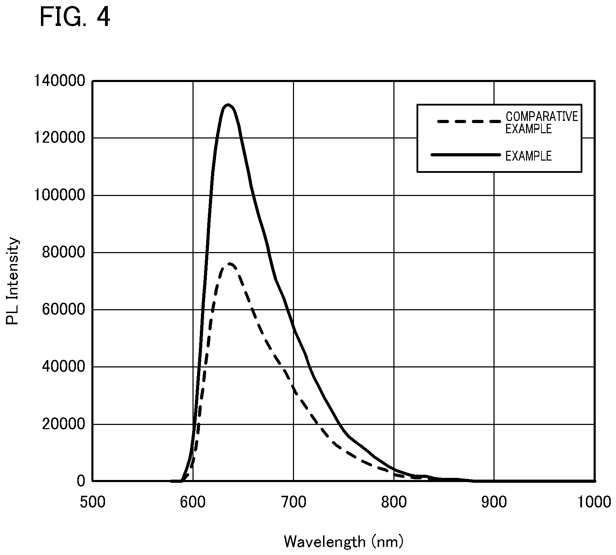

Fig. 4 is a graph showing emission spectra of toluene dispersions of color conversion particles in Examples. The horizontal axis in Fig. 4 indicates the emission wavelength, and the vertical axis in Fig. 4 indicates the normalized emission intensity. In Fig. 4, the emission spectrum of the color conversion particle (BaZrS₃/ZnS dispersion liquid) of Example is indicated by a solid line. Further, in Fig. 4, as Comparative Example, the emission spectrum of the color conversion particle (BaZrS₃ dispersion) in which no shell is formed on the BaZrS₃ particle body is indicated by a broken line.

As shown in Fig. 4, the wavelength showing the peak of the emission spectrum hardly changes between Example and Comparative Example. Meanwhile, since the non-radiative recombination of carriers on the particle surface was suppressed by the formation of the shell in Examples, it was confirmed that the emission intensity of the peak of the emission spectrum in Example was greatly increased as compared with Comparative Example.

In addition, a solid solution is formed at the interface between the shell and the core, as a result of which the particle size of the core is reduced and a size effect is obtained, thereby enabling the emission wavelength to be changed.

As described above, the embodiments of the present invention has been described, but the embodiments are presented as one example, and is not intended to limit the scope of the present invention. The embodiments can be implemented in various forms other than the above-described forms, and various omissions, substitutions, changes, and the like can be made without departing from the gist of the present invention. Embodiments and modifications thereof are included in the scope and gist of the present invention, and the invention described in the claims and equivalents thereof are also included in the scope and gist of the present invention.

The present application claims priority based on Japanese Patent Application No. 2022-203590 filed on December 20, 2022, and the entire contents of Japanese Patent Application No. 2022-203590 are incorporated herein by reference.

### Reference Signs List

- 10: Color conversion particle
- 11: Particle body
- 11a: Inner layer
- 11b: Outer layer
- 12: Shell

## Claims

1. A color conversion particle comprising:
a particle body that contains a chalcogenide perovskite and emits light in response to excitation light received; and
a shell that is formed of a semiconductor material for transmitting the excitation light and covers the particle body to inactivate defects on a surface of the particle body,
wherein the shell has a band gap more than 2.7 eV.

2. The color conversion particle according to claim 1, wherein
the chalcogenide perovskite has a crystal structure of any one of crystal structures of a cubic perovskite, a tetragonal perovskite, a GdFeO₃ type orthorhombic perovskite, a Ruddlesden-Popper type layered perovskite, a Dion-Jacobson type layered perovskite, and a double perovskite.

3. The color conversion particle according to claim 2, wherein
the chalcogenide perovskite has a chemical formula of ABX₃ or A'₂Aₙ₋₁BₙX₃ₙ₊₁ (A and A' are Group 2 elements, B is a Group 4 element, X is a chalcogen element, and n is an integer of 1 or more).

4. The color conversion particle according to claim 3, wherein
the A, the A', the B, and the X include a mixture of elements of respective groups at any ratio.

5. The color conversion particle according to any one of claims 1 to 4, wherein
the chalcogenide perovskite is selected from any one of SrZrS₃, SrZrSe₃, SrHfS₃, SrHfSe₃, BaZrS₃, BaZrSe₃, BaHfS₃, BaHfSe₃, Sr₂Baₙ₋₁ZrₙS₃ₙ₊₁, Sr₂Baₙ₋₁ZrₙSe₃ₙ₊₁, Srₙ₊₁ZrₙS₃ₙ₊₁, Srₙ₊₁ZrₙSe₃ₙ₊₁, Ba₂Srₙ₋₁ZrₙS₃ₙ₊₁, Ba₂Srₙ₋₁ZrₙSe₃ₙ₊₁, Baₙ₊₁ZrₙS₃ₙ₊₁, Baₙ₊₁ZrₙSe₃ₙ₊₁, Sr₂Baₙ₋₁HfₙS₃ₙ₊₁, Sr₂Baₙ₋₁HfₙSe₃ₙ₊₁, Srₙ₊₁HfₙS₃ₙ₊₁, Srₙ₊₁HfₙSe₃ₙ₊₁, Ba₂Srₙ₋₁HfₙS₃ₙ₊₁, Ba₂Srₙ₋₁HfₙSe₃ₙ₊₁, Baₙ₊₁HfₙS₃ₙ₊₁, and Baₙ₊₁HfₙSe₃ₙ₊₁ (where n is an integer of 1 or more) .

6. The color conversion particle according to any one of claims 1 to 5, wherein
the chalcogenide perovskite is (SrₓBa₁₋ₓ (Zr_{y}Hf_{1-y})(S_{z}Se_{1-z})₃ or (Sr_{x'}Ba_{1-x'})₂(SrₓBa₁₋ₓ)ₙ₋₁(Zr_{y}Hf_{1-y})ₙ(S_{z}Se_{1-z})₃ₙ₊₁ (where each of x, x', y, and z is a value of 0 or more and 1 or less).

7. The color conversion particle according to any one of claims 1 to 6, wherein
the shell has a band gap of 3.1 eV or more.

8. The color conversion particle according to claim 7, wherein
the shell has a band gap of 3.6 eV or more.

9. The color conversion particle according to any one of claims 1 to **8,** wherein
the particle body is entirely formed of the chalcogenide perovskite.

10. The color conversion particle according to any one of claims 1 to **8,** wherein
the particle body includes:
an inner layer as a light emission unit; and
an outer layer including the inner layer and absorbing the excitation light, and
the inner layer being formed of the chalcogenide perovskite.

11. The color conversion particle according to any one of claims 1 to 6, wherein
the particle body includes:
an inner layer as a light emission unit; and
an outer layer including the inner layer and absorbing the excitation light,
the outer layer being formed of the chalcogenide perovskite.

12. The color conversion particle according to claim 11, wherein
the inner layer is formed of the chalcogenide perovskite different from the outer layer.

13. The color conversion particle according to any one of claims 1 to 12, wherein
the shell is formed of the chalcogenide perovskite different from the particle body.

14. The color conversion particle according to any one of claims 1 to 13, wherein
energy at a lower end of a conduction band of the shell is higher than energy at a lower end of a conduction band of the particle body, and energy at an upper end of a valence band of the shell is lower than energy at an upper end of a valence band of the particle body.

15. The color conversion particle according to claim 9, wherein
the particle body is BaZrS₃, and
the shell is ZnS.

16. A powder comprising the color conversion particle according to any one of claims 1 to 15.

17. A solution comprising the color conversion particle according to any one of claims 1 to 15.

18. A thin film comprising the color conversion particle according to any one of claims 1 to 15.

19. A sheet comprising the color conversion particle according to any one of claims 1 to 15.

20. A device comprising the color conversion particle according to any one of claims 1 to 15.
